# EUROPEAN PATENT SPECIFICATION

(11) **EP 3 984 289 B1**
(45) Date of publication and mention of the grant of the patent: **02.07.2025**
(21) Application number: 19932614.1
(22) Date of filing: 12.06.2019
(51) Int. Cl.: H04W 52/02, H04W 68/00, H04W 76/27, H04W 76/28

(54) **MECHANISM FOR HANDLING PDCCH SKIPPING AND WAKE UP SIGNALING**
MECHANISMUS ZUR HANDHABUNG VON PDCCH-ÜBERSPRINGEN UND AUFWECKSIGNALISIERUNG
MÉCANISME DE GESTION D'UN SAUT DE PDCCH ET D'UNE SIGNALISATION DE RÉVEIL

(43) Date of publication of application: 20.04.2022
(73) Proprietor: Nokia Technologies Oy, 02610 Espoo (FI)
(72) Inventor: KOSKINEN, Jussi-Pekka, 90420 Oulu (FI); WU, Chunli, Beijing 100102 (CN); TURTINEN, Samuli, Li 91100 (FI)
(74) Representative: Nokia EPO representatives
(86) International application number: PCT/CN2019/090854
(87) International publication number: WO 2020/248153

(56) References cited:
- CN-A- 103 200 653
- CN-A- 109 219 116
- CN-A- 109 314 869
- CN-A- 109 496 446
- US-A1- 2018 332 549
- HUAWEI ET AL: "PDCCH based power saving signal/channel", vol. RAN WG1, no. Xi'an, China; 20190408 - 20190412, 2 April 2019 (2019-04-02), pages 1 - 7, XP051707079, Retrieved from the Internet <URL:http://www.3gpp.org/ftp/tsg%5Fran/WG1%5FRL1/TSGR1%5F96b/Docs/R1%2D1903988%2Ezip> [retrieved on 20190402]
- CATT: "PDCCH skipping and switching of PDCCH monitoring periodicity", vol. RAN WG1, no. Reno, USA; 20190513 - 20190517, 13 May 2019 (2019-05-13), XP051727803, Retrieved from the Internet <URL:http://www.3gpp.org/ftp/Meetings%5F3GPP%5FSYNC/RAN1/Docs/R1%2D1906353%2Ezip> [retrieved on 20190513]
- CATT: "PDCCH based power saving signal/channel design", vol. RAN WG1, no. Xi'an, China; 20190408 - 20190412, 3 April 2019 (2019-04-03), XP051707442, Retrieved from the Internet <URL:http://www.3gpp.org/ftp/tsg%5Fran/WG1%5FRL1/TSGR1%5F96b/Docs/R1%2D1905368%2Ezip> [retrieved on 20190403]
- NOKIA ET AL.: "Wake-up signal configurations and procedures", 3GPP TSG RAN WG1 MEETING #93 R1-1806159, 25 May 2018 (2018-05-25), XP051461739
- VIVO: "PDCCH-based power saving signal/channel", 3GPP TSG RAN WG1 #97 R1-1906170, 17 May 2019 (2019-05-17), XP051708209

## Description

### FIELD

Embodiments of the present disclosure generally relate to the field of telecommunication and in particular, to methods, apparatuses and computer readable storage media for handling physical downlink control channel (PDCCH) skipping and wake up signaling.

### BACKGROUND

Discontinuous reception (DRX) is designed to reduce power consumption by allowing a communication device to discontinuously receive information from another communication device. For example, when the DRX is enabled, user equipment (UE) may be configured with one or more DRX cycles, each comprising a DRX on-duration for monitoring a downlink control channel from a network device. As such, the UE only needs to discontinuously monitor the downlink channel. Otherwise, the UE needs to continuously monitor the downlink channel. 3GPP drafts R1-1903988, R1-1906353, and R1-1905368 discuss Physical Downlink Control Channel (PDCCH) based power saving, and PDCCH based skipping and switching of PDCCH monitoring periodicity.

Wake up signaling (WUS) is designed to allow the UE to skip monitoring the downlink channel when there is no transmission to be done, such that the power consumption can be further reduced. For example, if the network device intends to schedule the UE, it needs to send WUS to the UE during one or more WUS occasions so as to wake up the UE first. The UE will then monitor the control channel for scheduling information during a coming DRX on-duration. Further, the PDCCH skipping has been proposed in order to save UE power. The network devices may indicate the UE to skip a number of PDCCH monitoring occasions.

### SUMMARY

In general, example embodiments of the present disclosure provide a solution for handling PDCCH skipping and wake up signaling.

In a first aspect, there is provided a first device according to claim 1.

In a second aspect, there is provided a second device according to claim 7.

In a third aspect, there is provided a method according to claim 11.

In a fourth aspect, there is provided a method according to claim 12.

In a fifth aspect, there is provided a computer-readable storage medium according to claim 13.

In a sixth aspect, there is provided a computer-readable storage medium according to claim 14.

Further aspects are provided by the dependent claims.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
Fig. 1 illustrates an example communication network in which embodiments of the present disclosure may be implemented;
Fig. 2 illustrates a flowchart of an example method according to some example embodiments of the present disclosure;
Figs. 3A-3B illustrate example diagrams of PDCCH skiing and WUS monitoring according to some example embodiments of the present disclosure;
Fig. 4 illustrates a flowchart of an example method according to some example embodiments of the present disclosure;
Fig. 5 illustrates a simplified block diagram of an apparatus that is suitable for implementing embodiments of the present disclosure; and
Fig. 6 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an example embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT), New Radio (NR) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

Although functionalities described herein can be performed, in various example embodiments, in a fixed and/or a wireless network node may, in other example embodiments, functionalities may be implemented in a user equipment apparatus (such as a cell phone or tablet computer or laptop computer or desktop computer or mobile IOT device or fixed IOT device). This user equipment apparatus can, for example, be furnished with corresponding capabilities as described in connection with the fixed and/or the wireless network node(s), as appropriate. The user equipment apparatus may be the user equipment and/or or a control device, such as a chipset or processor, configured to control the user equipment when installed therein. Examples of such functionalities include the bootstrapping server function and/or the home subscriber server, which may be implemented in the user equipment apparatus by providing the user equipment apparatus with software configured to cause the user equipment apparatus to perform from the point of view of these functions/nodes.

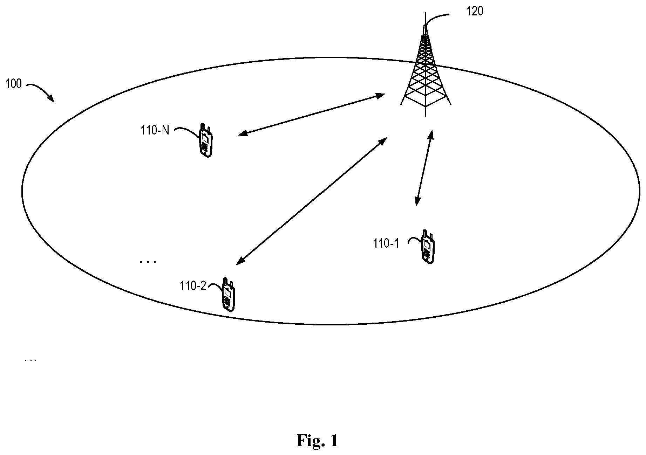

Fig. 1 illustrates a schematic diagram of a communication system 100 in which embodiments of the present disclosure can be implemented. The communication system 100, which is a part of a communication network, comprises devices 110-1, 110-2, . . . , 110-N (collectively referred to as "device(s) 110" where N is an integer number). The communication system 100 comprises one or more devices, for example, a device 120. It should be understood that the communication system 100 may also comprise other elements which are omitted for the purpose of clarity. It is to be understood that the numbers of devices in Fig. 1 are given for the purpose of illustration without suggesting any limitations. The device 120 may communicate with the device 110.

Communications in the communication system 100 may be implemented according to any proper communication protocol(s), including, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, including but not limited to: Code Divided Multiple Address (CDMA), Frequency Divided Multiple Address (FDMA), Time Divided Multiple Address (TDMA), Frequency Divided Duplexer (FDD), Time Divided Duplexer (TDD), Multiple-Input Multiple-Output (MIMO), Orthogonal Frequency Divided Multiple Access (OFDMA) and/or any other technologies currently known or to be developed in the future.

In the communication network 100, the device 110 and the device 120 can communicate data and control information to each other. In the case that the device 110 is the terminal device and the device 120 is the network device, a link from the device 120 to the device 110 is referred to as a downlink (DL), while a link from the device 110 to the device 120 is referred to as an uplink (UL).

The device 110 and the device 120 may be configured with discontinuous communication for the purpose of power saving. The discontinuous communication may include discontinuous reception (DRX) and/or discontinuous transmission (DTX). Either or both of the device 110 and device120 can be configured with DRX and/or DTX. For example, when the DRX is configured, the first device 110 discontinuously monitors information/data (for example, downlink information/data) transmitted from the device 120. When the DTX is configured, the first device 110 discontinuously transmits information/data (for example, uplink information/data) to the device 120. Similarly, the device 120 may also be possibly configured with DRX or DTX.

When DRX is configured, to receive data, a device (for example, the first device 110) may first awake to monitor control information which indicates whether the device is scheduled to receive data and how the data can be received. A DRX cycle specifies the periodic repetition of the DRX on-duration followed by a possible period of inactivity. The DRX cycle includes an on-duration (also referred to "DRX on-duration") and an off-duration (also referred to "DRX off-duration"). The DRX on-duration is an active time during which a device (for example, the device 110) monitors transmissions from a further device (for example, the device 120) within a DRX cycle. The information may include control information transmitted via a physical downlink control channel (PDCCH).

To further reduce the power consumption, in some example embodiments, a device (for example, the device 110) configured with DRX may be also configured with one or more WUS occasions for monitoring WUS from a further device (for example, the device 120). If WUS is detected on at least one WUS occasion to wake up the UE, the device may monitor transmissions from the further device during a DRX on-duration following the at least one WUS occasion. However, if no WUS is detected or WUS indicating not to wake up is received, the device may not monitor transmissions from the further device during a coming DRX on-duration. As such, the power consumption can be further reduced.

As discussed above, technologies of WUS and PDCCH skipping have been proposed to save power. With PDCCH skipping, downlink control information is used to indicate the UE to skip PDCCH monitoring for certain period. With DRX, the UE is configured with DRX cycles that keeps the UE awake periodically during OnDuration in case there is some data transmission needed, and the active time can be extended by scheduling the UE with inactivity timer when there is data transmission ongoing. While with WUS, WUS occasion(s) can be configured before each OnDuration with a certain offset and the UE only monitors the n OnDuration if there is a WUS indicates the UE to monitor.

However, it is possible that the WUS and the PDCCH skipping may be configured at the same time. The potential impacts on the WUS and the PDCCH skipping are not discussed. In this case, how to handle WUS occasions during the PDCCH skipping needs to be specified.

According to example embodiments of the present disclosure, there is provided a solution for handling WUS occasions and the PDCCH skipping. In this solution, the device may determine whether to skip monitoring the PDCCH and determine whether to skip monitoring the WUS based on the type of PDCCH. The device may also determine when to transmit the WUS based on the type of the PDCCH. In this way, the WUS and the PDCCH skipping can be configured simultaneously and the power can be further saved.

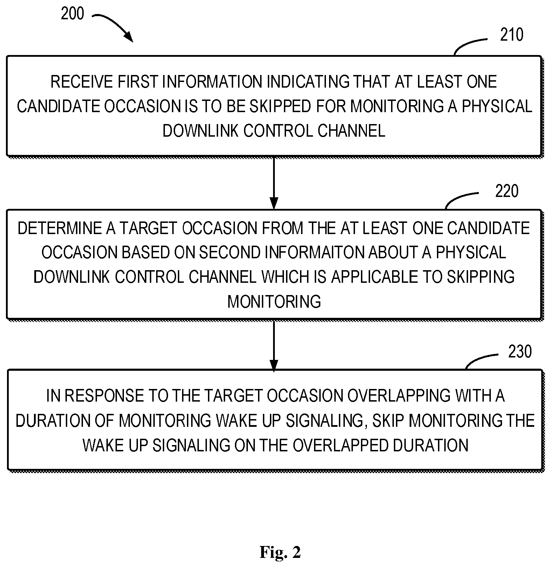

Reference is now made to Fig. 2, which illustrates a flowchart of an example method 200 in accordance with some example embodiments of the present disclosure. The method 200 will be described from the perspective of the device 110 with reference to Fig. 1. It would be appreciated that the method 200 may also be implemented at the device 120 in Fig. 1. Only for the purpose of illustrations, the method 200 is described to be implemented at the device 110-1.

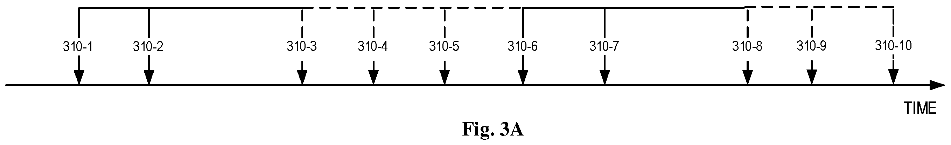

At block 210, the device 110-1 receives first information from the device 120. The first information indicates that one or more target occasions for monitoring the PDCCH which can be skipped by the device 110-1. Fig. 3A illustrates an example diagram of PDCCH skipping. As shown in Fig. 3A, the monitoring occasions 310-1, 310-2, 310-3, 310-4, 310-5, 310-6, 310-7, 310-8, 310-9 and 310-10 can be used for monitoring the PDCCH. The first information may indicate that the candidate monitoring occasions 310-3, 310-4, 310-5, 310-8, 310-9 and 310-10 may be skipped. It should be noted that the number of monitoring occasions shown in Fig. 3A is only as an example, not a limitation.

At block 220, the device 110-1 determines a target occasion from the candidate occasions based on second information about a PDCCH which is applicable to skipping monitoring. In some embodiments, the second information may be received from the device 120 on radio resource signaling. Alternatively or in addition, the second information may be transmitted in a medium access control (MAC) control element from the device 120. In a further embodiment, the second information may be pre-defined. In some embodiments, the second information may also be transmitted in the first information from the device 120. In this way, the PDCCH skipping and the WUS are able to be configured at the same time, thereby saving power of the terminal device.

In some embodiments, the second information may indicate that the PDCCH skipping is applicable to a PDCCH which is addressed to a cell radio network temporary identifier (C-RNTI) for DL assignment or UL grant. Alternatively, the second information may indicate that the PDCCH skipping is applicable to a PDCCH which is addressed to a configured scheduling radio network temporary identifier (CS-RNTI) for DL assignment. For example, if the monitoring occasion 310-6 is not for monitoring the PDCCH which is addressed to the C-RNTI, the device 110-1 may not select the monitoring occasion 310-6 to be the target monitoring occasion, which means the device 110-1 may monitor the PDCCH on the monitoring occasion 310-6. If the monitoring occasion 310-3 is for monitoring the PDCCH which is addressed to the C-RNTI, the device 110-1 may select the monitoring occasion 310-3 to be the target monitoring occasion, which means the device 110-1 may skip monitoring the PDCCH on the monitoring occasion 310-3.

Alternatively, the second information indicates that the PDCCH skipping is applicable to a PDCCH with a specific downlink control information (DCI) format, e.g. the DCI format for DL assignment or UL grant. For example, if the monitoring occasion 310-3 is for monitoring the PDCCH with the DCI format, the device 110-1 selects the monitoring occasion 310-3 to be the target monitoring occasion, which means the device 110-1 skips monitoring the PDCCH on the monitoring occasion 310-3.

In a further embodiment, the second information indicates that the PDCCH skipping is applicable to a PDCCH without the DCI for WUS, which means the PDCCH skipping does not apply to the WUS occasions. For example, if the monitoring occasion 310-7 is used for monitoring the DCI for WUS, the device 110-1 does not select the monitoring occasion 310-7 to be the target monitoring occasion, which means the device 110-1 monitors the PDCCH on the monitoring occasion 310-7. If the monitoring occasion 310-4 is used for monitoring the PDCCH without the DCI for WUS, the device 110-1 selects the monitoring occasion 310-4 to be the target monitoring occasion, which means the device 110-1 skips monitoring the PDCCH on the monitoring occasion 310-4.

In another embodiments, the second information may indicate that the PDCCH skipping is applicable to all PDCCHs. That is to say, all the candidate monitoring occasions 310-3, 310-4, 310-5, 310-8, 310-9 and 310-10 indicated in the first information may be selected to be the target occasions. Alternatively, the skip command may indicate to which PDCCH the command is applicable.

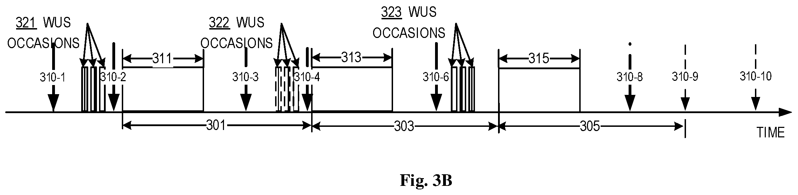

At block 230, the device 110-1 skips monitoring the WUS if the period for monitoring the WUS overlaps with the target monitoring occasion for the PDCCH. Fig. 3B illustrates an example diagram of WUS monitoring. Fig. 3B shows three DRX cycles 301, 303 and 305. For example, the DRX cycle 301 comprises a DRX on-duration 311. The DRX cycle 303 comprises a DRX on-duration 313. The DRX cycle 305 comprises a DRX on-duration 315. Fig. 3B also show a plurality of durations 321, 322 and 323 for monitoring WUS. For example, as shown in Fig. 3B, the WUS durations before the DRX on-duration 311 comprise three occasions. The WUS duration 322 before the DRX on-duration 313 comprise three occasions. The WUS duration 323 before the DRX on-duration 315 comprise three occasions. It would be appreciated that the number of the WUS occasions before each DRX on-duration is shown only for the purpose of illustration, without suggesting any limitation to the present disclosure. In some embodiments, there may be only one WUS occasion before each DRX on-duration. Alternatively, or in addition, in some embodiments, the numbers of WUS occasions before different DRX on-durations may be different.

In some embodiment, for example, since the monitoring occasion 310-6 is not for monitoring the PDCCH which is addressed to the C-RNTI, the device 110-1 may monitor the PDCCH on the monitoring occasion 310-6. As shown in Fig. 3B, the device 110-1 may monitor the WUS on the WUS duration 323. In some embodiments, for example, since the monitoring occasion 310-1 is used for monitoring the DCI for WUS, the device 110-1 may monitor the PDCCH on the monitoring occasion 310-1. As shown in Fig. 3B, the device 110-1 may monitor the WUS on the WUS duration 321.

Only for the purpose of illustrations, if the monitoring occasions 310-3 and 310-4 are selected to be the target monitoring occasions, the device 110-1 may skip monitoring the PDCCH on the monitoring occasions 310-3 and 310-4. As shown in Fig. 3B, the WUS duration 322 overlap with the monitoring occasions 310-3 and 310-4. In this situation, the device 110-1 may skip monitoring the WUS on the WUS duration 322. For the following OnDuration 313 where the device 110-1 misses the WUS occasions, the device 110-1 does not monitor PDCCH as if no WUS is received. In some embodiments, if all the monitoring occasions are determined to be the target monitoring occasions, the device 110-1 may skip the WUS durations 321, 322 and 323.

In some embodiments, the device 110-1 may receive a skipping indication as to whether the device 110-1 monitors the WUS and/or the PDCCH after the skip period. If the skipping indication indicates the device 110-1 to monitor the WUS and/or the PDCCH, the device 110-1 may perform the monitoring. If the skipping indication indicates the device 110-1 not to monitor the WUS and/or the PDCCH, the device 110-1 may skip the monitoring. In other embodiments, the device 110-1 may receive a skipping indication as to whether the device 110-1 monitors the WUS and/or the PDCCH during the skip period. If the skipping indication indicates the device 110-1 to monitor the WUS and/or the PDCCH, the device 110-1 may perform the monitoring. If the skipping indication indicates the device 110-1 not to monitor the WUS and/or the PDCCH, the device 110-1 may skip the monitoring.

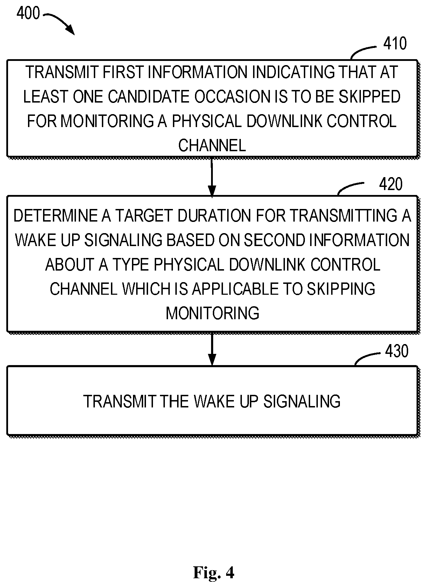

Fig. 4 illustrates a flowchart of an example method 400 in accordance with some example embodiments of the present disclosure. For the purpose of discussion, the method 400 will be described from the perspective of the device 120 with reference to Fig. 1. It would be appreciated that the method 400 may also be implemented at the device 110 in Fig. 1.

At block 410, the device 120 transmits first information to the device 110-1. The first information indicates that one or more target occasions for monitoring the PDCCH which can be skipped by the device 110-1. As shown in Fig. 3A, the monitoring occasions 310-1, 310-2, 310-3, 310-4, 310-5, 310-6, 310-7, 310-8, 310-9 and 310-10 can be used for monitoring the PDCCH. The first information may indicate that the candidate monitoring occasions 310-3, 310-4, 310-5, 310-8, 310-9 and 310-10 may be skipped. It should be noted that the number of monitoring occasions shown in Fig. 3A is only as an example, not a limitation.

At block 420, the device 120 determines a target duration for transmitting the WUS based on second information about a PDCCH which is applicable to skipping monitoring. In this way, the device 120 may be able to avoid transmitting the WUS on the occasions which may be skipped.

In some embodiments, the second information may indicate that the PDCCH skipping is applicable to a PDCCH which is addressed to a cell radio network temporary identifier (C-RNTI) for UL grant. Alternatively, the second information may indicate that the PDCCH skipping is applicable to a PDCCH which is addressed to a configured scheduling radio network temporary identifier (CS-RNTI) for DL assignment. For example, if the monitoring occasion 310-6 is not for monitoring the PDCCH which is addressed to the C-RNTI, the device 120 may select the duration 323 for transmitting the WUS which may overlap with the monitoring occasion 310-6. If the monitoring occasion 310-3 is for monitoring the PDCCH which is addressed to the C-RNTI, the device 120 may transmit the WUS on the duration which does not overlap with the monitoring occasion 310-3.

Alternatively, the second information may indicate that the PDCCH skipping is applicable to a PDCCH with a specific downlink control information (DCI) format, e.g. the DCI format for DL assignment or UL grant. For example, if the monitoring occasion 310-3 is for monitoring the PDCCH with the DCI format, the device 110-1 may select the duration which is not overlapping with the monitoring occasion 310-3.

In a further embodiment, the second information may indicate that the PDCCH skipping is applicable to a PDCCH without the DCI for WUS. For example, if the monitoring occasion 310-7 is used for monitoring the DCI for WUS, the device 120 may select the duration for transmitting the WUS which may overlap with the monitoring occasion 310-7.

In another embodiments, the second information may indicate that the PDCCH skipping is applicable to all PDCCHs. The device 120 may transmit the WUS on the duration which does not overlap with any of the monitoring occasions shown in Fig. 3A.

In some embodiments, the second information may be received from the device 120 on radio resource signaling. Alternatively or in addition, the second information may be transmitted in a medium access control (MAC) control element from the device 120. In a further embodiment, the second information may be pre-defined. In some embodiments, the second information may also be transmitted in the first information from the device 120.

At block 430, the device 120 may transmit the WUSP on the determined duration. In some embodiments, the device 120 may generate a skipping indication as to whether the device 110-1 monitors the WUS and/or the PDCCH after the period on which the PDCCH monitoring is skipped. In other embodiments, the device 120 may generate a skipping indication as to whether the device 110-1 monitors the WUS and/or the PDCCH during the period on which the PDCCH monitoring is skipped. The device 120 may transmit the skipping indication to the device.

In some example embodiments, an apparatus capable of performing the method 200 (for example, the device 110 or the device 120) may comprise means for performing the respective steps of the method 200. The means may be implemented in any suitable form. For example, the means may be implemented in a circuitry or software module.

In some example embodiments, the apparatus comprises means for receiving, at a first device and from a second device, first information indicating that candidate occasions are to be skipped for monitoring physical downlink control channel; means for determining a target occasion from the candidate occasions based on second information about a physical downlink control channel which is applicable to skipping monitoring; and means for in response to the target occasion overlapping with a duration for monitoring wake up signaling, skipping monitoring the wake up signaling on the period.

In some example embodiments, the means for determining the target occasion comprises: means for in response to the second information indicating a physical downlink control channel which is addressed to a cell radio network temporary identifier is applicable to skipping monitoring, determining, as the target occasion, one of the candidate occasions addressed to the cell radio network temporary identifier.

In some example embodiments, the means for determining the target occasion comprises means for in response to the second information indicating a physical downlink control channel with a downlink control information format for scheduling downlink assignment or uplink grant is applicable to skipping monitoring, determining, as the target occasion, one of the candidate occasions with the downlink control information format for scheduling downlink assignment or uplink grant.

In some example embodiments, the means for determining the target occasion comprises: means for in response to the second information indicating downlink control information for the wake up signaling is inapplicable to skipping monitoring, determining, as the target occasion, one of the candidate occasions without the downlink control information for the wake up signaling.

In some example embodiments, the means for determining the target occasion comprises: means for in response to the second information indicating all the physical downlink control channels are applicable to skipping monitoring, determining all the candidate occasions to be the target occasion.

In some example embodiments, the apparatus further comprises: means for receiving the second information via at least one of radio resource control signaling and a MAC control element.

In some example embodiments, the second information is pre-defined.

In some example embodiments, the apparatus further comprises means for receiving a skipping indication as to whether the first device monitors at least one of the wake up signaling and the physical downlink control channel after the duration; and means for monitoring, based on the skipping indication, the at least one of the wake up signaling and the physical downlink control channel after the duration.

In some example embodiments, the apparatus further comprises means for receiving a skipping indication as to whether the first device monitors at least one of the wake up signaling and the physical downlink control channel in the duration; and means for monitoring, based on the skipping indication, the at least one of the wake up signaling and the physical downlink control channel in the duration.

In some example embodiments, the apparatus further comprises wherein the first device is a terminal device and the second device is a network device.

In some example embodiments, an apparatus capable of performing the method 400 (for example, the device 110 or the device 120) may comprise means for performing the respective steps of the method 400. The means may be implemented in any suitable form. For example, the means may be implemented in a circuitry or software module.

In some example embodiments, the apparatus comprises means for transmitting, to a first device, first information indicating that candidate occasions are to be skipped for monitoring physical downlink control channel; means for determining a target duration for transmitting a wake up signaling based on second information about a physical downlink control channel which is applicable to skipping monitoring; and means for transmitting the wake up signaling on the target duration.

In some example embodiments, the means for determining the target duration comprises: means for in response to the second information indicating a physical downlink control channel which is addressed to a cell radio network temporary identifier is applicable to skipping monitoring, determining a duration which is non-overlapping with the candidate occasions addressed to the cell radio network temporary identifier to be the target duration.

In some example embodiments, the means for determining the target duration comprises means for in response to the second information indicating a physical downlink control channel with a downlink control information format for scheduling downlink assignment or uplink grant is applicable to skipping monitoring, determining a duration which is non-overlapping with the candidate occasions with the downlink control information format to be the target duration.

In some example embodiments, the means for determining the target duration comprises: means for in response to the second information indicating downlink control information for the wake up signaling is inapplicable to skipping monitoring, determining a duration with the downlink control information to be the target duration.

In some example embodiments, the means for determining the target duration comprises: means for in response to the second information indicating all the physical downlink control channels are applicable to skipping monitoring, determining a duration which is non-overlapping with all the candidate occasions to be the target duration.

In some example embodiments, the apparatus further comprises means for transmitting the second information via at least one of radio resource control signaling and a MAC control element.

In some example embodiments, the second information is pre-defined.

In some example embodiments, the apparatus further comprises: means for generating a skipping indication as to whether the first device monitors at least one of the wake up signaling and the physical downlink control channel after a period which is skipped for monitoring the physical downlink control channel; and means for transmitting the skipping indication to the first device.

In some example embodiments, the apparatus further comprises: means for generating a skipping indication as to whether the first device monitors at least one of the wake up signaling and the physical downlink control channel during a period which is skipped for monitoring the physical downlink control channel; and means for transmitting the skipping indication to the first device.

In some example embodiments, the first device is a terminal device and the second device is a network device.

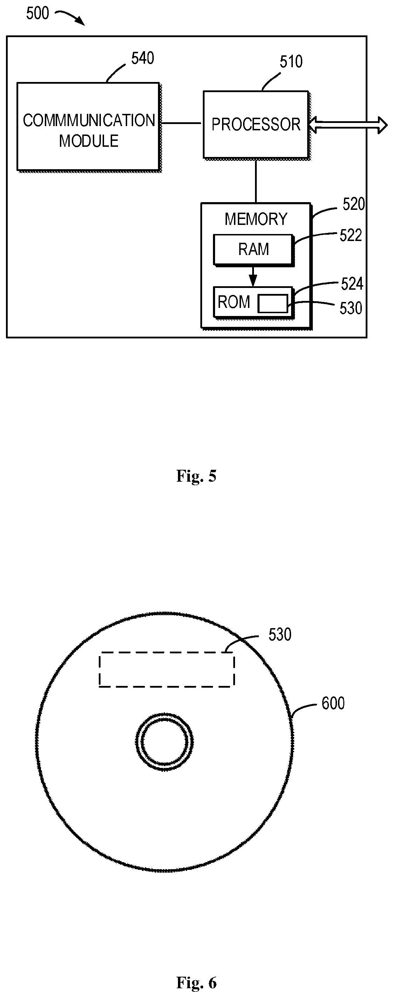

Fig. 5 is a simplified block diagram of a device 500 that is suitable for implementing embodiments of the present disclosure. The device 500 may be provided to implement the communication device, for example the device 110, or the device 120 as shown in Fig. 1. As shown, the device 500 includes one or more processors 510, one or more memories 520 coupled to the processor 510, and one or more communication modules 540 coupled to the processor 510.

The communication module 540 is for bidirectional communications. The communication module 540 has at least one antenna to facilitate communication. The communication interface may represent any interface that is necessary for communication with other network elements.

The processor 510 may be of any type suitable to the local technical network and may include one or more of the following: general purpose computers, special purpose computers, microprocessors, digital signal processors (DSPs) and processors based on multicore processor architecture, as non-limiting examples. The device 500 may have multiple processors, such as an application specific integrated circuit chip that is slaved in time to a clock which synchronizes the main processor.

The memory 520 may include one or more non-volatile memories and one or more volatile memories. Examples of the non-volatile memories include, but are not limited to, a Read Only Memory (ROM) 524, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 522 and other volatile memories that will not last in the power-down duration.

A computer program 530 includes computer executable instructions that are executed by the associated processor 510. The program 530 may be stored in the ROM 524. The processor 510 may perform any suitable actions and processing by loading the program 530 into the RAM 522.

The embodiments of the present disclosure may be implemented by means of the program 530 so that the device 500 may perform any process of the disclosure as discussed with reference to Figs. 2 and 4. The embodiments of the present disclosure may also be implemented by hardware or by a combination of software and hardware.

In some example embodiments, the program 530 may be tangibly contained in a computer readable medium which may be included in the device 500 (such as in the memory 520) or other storage devices that are accessible by the device 500. The device 500 may load the program 530 from the computer readable medium to the RAM 522 for execution. The computer readable medium may include any types of tangible non-volatile storage, such as ROM, EPROM, a flash memory, a hard disk, CD, DVD, and the like. Fig. 6 shows an example of the computer readable medium 600 in form of CD or DVD. The computer readable medium has the program 530 stored thereon.

It should be appreciated that future networks may utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications, this may mean node operations to be carried out, at least partly, in a central/centralized unit, CU, (e.g. server, host or node) operationally coupled to distributed unit, DU, (e.g. a radio head/node). It is also possible that node operations will be distributed among a plurality of servers, nodes or hosts. It should also be understood that the distribution of labour between core network operations and base station operations may vary depending on implementation.

In an embodiment, the server may generate a virtual network through which the server communicates with the distributed unit. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Therefore, in an embodiment, a CU-DU architecture is implemented. In such case the apparatus 500 may be comprised in a central unit (e.g. a control unit, an edge cloud server, a server) operatively coupled (e.g. via a wireless or wired network) to a distributed unit (e.g. a remote radio head/node). That is, the central unit (e.g. an edge cloud server) and the distributed unit may be stand-alone apparatuses communicating with each other via a radio path or via a wired connection. Alternatively, they may be in a same entity communicating via a wired connection, etc. The edge cloud or edge cloud server may serve a plurality of distributed units or a radio access networks. In an embodiment, at least some of the described processes may be performed by the central unit. In another embodiment, the apparatus 500 may be instead comprised in the distributed unit, and at least some of the described processes may be performed by the distributed unit.

In an embodiment, the execution of at least some of the functionalities of the apparatus 500 may be shared between two physically separate devices (DU and CU) forming one operational entity. Therefore, the apparatus may be seen to depict the operational entity comprising one or more physically separate devices for executing at least some of the described processes. In an embodiment, such CU-DU architecture may provide flexible distribution of operations between the CU and the DU. In practice, any digital signal processing task may be performed in either the CU or the DU and the boundary where the responsibility is shifted between the CU and the DU may be selected according to implementation. In an embodiment, the apparatus 500 controls the execution of the processes, regardless of the location of the apparatus and regardless of where the processes/functions are carried out.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 400 as described above with reference to Fig. 4. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first device comprising:
means for receiving (210), at the first device and from a second device, first information indicating that candidate occasions are to be skipped for monitoring physical downlink control channel;
means for determining (220) a target occasion from the candidate occasions based on second information indicating that skipping monitoring is applicable to a physical downlink control channel with a downlink control information format for scheduling downlink assignment or uplink grant, wherein the skipping monitoring does not apply to wake up signaling occasions; and
wherein the first device is configured to skip monitoring the physical downlink control channel on the target occasion.

2. The first device of claim 1, wherein the first device is configured to determine the target occasion by:
in response to the second information indicating a physical downlink control channel which is addressed to a cell radio network temporary identifier is applicable to skipping monitoring, determining, as the target occasion, one of the candidate occasions addressed to the cell radio network temporary identifier.

3. The first device of claim 1, wherein the first device is configured to determine the target occasion by:
in response to the second information indicating a physical downlink control channel with a downlink control information format for scheduling downlink assignment or uplink grant is applicable to skipping monitoring, determining, as the target occasion, one of the candidate occasions with the downlink control information format for scheduling downlink assignment or uplink grant.

4. The first device of any one of claims 1-3, wherein the first device is further configured to:
receive the second information via at least one of radio resource control signaling and a MAC control element.

5. The first device of claim 1, wherein the second information is pre-defined.

6. The first device of claim 1, wherein the first device is a terminal device and the second device is a network device.

7. A second device comprising:
means for transmitting (410), to a first device, first information indicating that candidate occasions are to be skipped for monitoring physical downlink control channel;
means for determining (420) a target duration for transmitting a wake up signaling based on second information indicating that skipping monitoring is applicable to a physical downlink control channel with a downlink control information format for scheduling downlink assignment or uplink grant, wherein the skipping monitoring does not apply to wake up signaling occasions; and
means for transmitting (430) the wake up signaling on the target duration.

8. The second device of claim 7, wherein the second device is configured to determine the target duration by:
in response to the second information indicating a physical downlink control channel which is addressed to a cell radio network temporary identifier is applicable to skipping monitoring, determining a duration which is non-overlapping with the candidate occasions addressed to the cell radio network temporary identifier to be the target duration.

9. The second device of claim 7, wherein the second device is configured to determine the target duration by:
in response to the second information indicating a physical downlink control channel with a downlink control information format for scheduling downlink assignment or uplink grant is applicable to skipping monitoring, determining a duration which is non-overlapping with the candidate occasions with the downlink control information format to be the target duration.

10. The second device of claim 7, wherein the first device is a terminal device and the second device is a network device.

11. A method comprising:
receiving (210), at a first device and from a second device, first information indicating that candidate occasions are to be skipped for monitoring physical downlink control channel;
determining (220) a target occasion from the candidate occasions based on second information indicating that skipping monitoring is applicable to a physical downlink control channel with a downlink control information format for scheduling downlink assignment or uplink grant, wherein the skipping monitoring does not apply to wake up signaling occasions; and
skipping monitoring the physical downlink control channel on the target occasion.

12. A method comprising:
transmitting (410), to a first device and from a second device, first information indicating that candidate occasions are to be skipped for monitoring physical downlink control channel;
determining (420) a target duration for transmitting a wake up signaling based on second information indicating that skipping monitoring is applicable to a physical downlink control channel with a downlink control information format for scheduling downlink assignment or uplink grant, wherein the skipping monitoring does not apply to wake up signaling occasions; and
transmitting (430) the wake up signaling on the target duration.

13. A computer readable storage medium comprising program instructions stored thereon, the instructions, when executed by an apparatus, causing the apparatus to perform at least the following:
receiving (210) first information indicating that candidate occasions are to be skipped for monitoring physical downlink control channel;
determining (220) a target occasion from the candidate occasions based on second information indicating that skipping monitoring is applicable to a physical downlink control channel with a downlink control information format for scheduling downlink assignment or uplink grant, wherein the skipping monitoring does not apply to wake up signaling occasions; and
skipping monitoring the physical downlink control channel on the target occasion.

14. A computer readable storage medium comprising program instructions stored thereon, the instructions, when executed by an apparatus, causing the apparatus to perform at least the following:
transmitting (410) first information indicating that candidate occasions are to be skipped for monitoring physical downlink control channel;
determining (420) a target duration for transmitting a wake up signaling based on second information indicating that skipping monitoring is applicable to a physical downlink control channel with a downlink control information format for scheduling downlink assignment or uplink grant, wherein the skipping monitoring does not apply to wake up signaling occasions; and
transmitting (430) the wake up signaling on the target duration.

## Patentansprüche

1. Erste Vorrichtung, die Folgendes umfasst:
Mittel zum Empfangen (210) von ersten Informationen, die anzeigen, dass Gelegenheitskandidaten zum Überwachen eines physischen Downlinksteuerkanals zu überspringen sind, an der ersten Vorrichtung von einer zweiten Vorrichtung;
Mittel zum Bestimmen (220) einer Zielgelegenheit aus den Gelegenheitskandidaten auf Basis von zweiten Informationen, die anzeigen, dass das Überspringen des Überwachens auf einen physischen Downlinksteuerkanal mit einem Downlinksteuerinformationsformat zum Planen einer Downlinkzuweisung oder einer Uplinkgewährung anwendbar ist, wobei das Überspringen des Überwachens nicht für Wecksignalisierungsgelegenheiten gilt; und
wobei die erste Vorrichtung dazu ausgelegt ist, das Überwachen des physischen Downlinksteuerkanals bei der Zielgelegenheit zu überspringen.

2. Erste Vorrichtung nach Anspruch 1, wobei die erste Vorrichtung dazu ausgelegt ist, die Zielgelegenheit durch Folgendes zu bestimmen:
in Reaktion darauf, dass die zweiten Informationen einen physischen Downlinksteuerkanal anzeigen, der an eine temporäre Zellfunknetzwerkkennung adressiert ist und auf den das Überspringen des Überwachens anwendbar ist, Bestimmen von einem der Gelegenheitskandidaten, der an die temporäre Zellfunknetzwerkkennung adressiert ist, als die Zielgelegenheit.

3. Erste Vorrichtung nach Anspruch 1, wobei die erste Vorrichtung dazu ausgelegt ist, die Zielgelegenheit durch Folgendes zu bestimmen:
in Reaktion darauf, dass die zweiten Informationen einen physischen Downlinksteuerkanal mit einem Downlinksteuerinformationsformat zum Planen einer Downlinkzuweisung oder einer Uplinkgewährung anzeigen, auf den das Überspringen des Überwachens anwendbar ist, Bestimmen von einem der Gelegenheitskandidaten mit dem Downlinksteuerinformationsformat zum Planen einer Downlinkzuweisung oder einer Uplinkgewährung als die Zielgelegenheit.

4. Erste Vorrichtung nach einem der Ansprüche 1 bis 3, wobei die erste Vorrichtung ferner zu Folgendem ausgelegt ist:
Empfangen der zweiten Informationen via mindestens eines von einer Funkressourcensteuersignalisierung und einem MAC-Steuerelement.

5. Erste Vorrichtung nach Anspruch 1, wobei die zweiten Informationen vordefiniert sind.

6. Erste Vorrichtung nach Anspruch 1, wobei die erste Vorrichtung eine Endgerätevorrichtung ist und die zweite Vorrichtung eine Netzwerkvorrichtung ist.

7. Zweite Vorrichtung, die Folgendes umfasst:
Mittel zum Übertragen (410) von ersten Informationen, die anzeigen, dass Gelegenheitskandidaten zum Überwachen eines physischen Downlinksteuerkanals zu überspringen sind, zu einer ersten Vorrichtung;
Mittel zum Bestimmen (420) einer Zieldauer zum Übertragen einer Wecksignalisierung auf Basis von zweiten Informationen, die anzeigen, dass das Überspringen des Überwachens auf einen physischen Downlinksteuerkanal mit einem Downlinksteuerinformationsformat zum Planen einer Downlinkzuweisung oder einer Uplinkgewährung anwendbar ist, wobei das Überspringen des Überwachens nicht für Wecksignalisierungsgelegenheiten gilt; und
Mittel zum Übertragen (430) der Wecksignalisierung bei der Zieldauer.

8. Zweite Vorrichtung nach Anspruch 7, wobei die zweite Vorrichtung dazu ausgelegt ist, die Zieldauer durch Folgendes zu bestimmen:
in Reaktion darauf, dass die zweiten Informationen einen physischen Downlinksteuerkanal anzeigen, der an eine temporäre Zellfunknetzwerkkennung adressiert ist und auf den das Überspringen des Überwachens anwendbar ist, Bestimmen einer Dauer, die sich nicht mit Gelegenheitskandidaten überlappt, die an die temporäre Zellfunknetzwerkkennung adressiert sind, als die Zieldauer.

9. Zweite Vorrichtung nach Anspruch 7, wobei die zweite Vorrichtung dazu ausgelegt ist, die Zieldauer durch Folgendes zu bestimmen:
in Reaktion darauf, dass die zweiten Informationen einen physischen Downlinksteuerkanal mit einem Downlinksteuerinformationsformat zum Planen einer Downlinkzuweisung oder einer Uplinkgewährung anzeigen, auf den das Überspringen des Überwachens anwendbar ist, Bestimmen einer Dauer, die sich nicht mit den Gelegenheitskandidaten mit dem Downlinksteuerinformationsformat überlappt, als die Zieldauer.

10. Zweite Vorrichtung nach Anspruch 7, wobei die erste Vorrichtung eine Endgerätevorrichtung ist und die zweite Vorrichtung eine Netzwerkvorrichtung ist.

11. Verfahren, das Folgendes umfasst:
Empfangen (210) von ersten Informationen, die anzeigen, dass Gelegenheitskandidaten zum Überwachen eines physischen Downlinksteuerkanals zu überspringen sind, an einer ersten Vorrichtung von einer zweiten Vorrichtung;
Bestimmen (220) einer Zielgelegenheit aus den Gelegenheitskandidaten auf Basis von zweiten Informationen, die anzeigen, dass das Überspringen des Überwachens auf einen physischen Downlinksteuerkanal mit einem Downlinksteuerinformationsformat zum Planen einer Downlinkzuweisung oder einer Uplinkgewährung anwendbar ist, wobei das Überspringen des Überwachens nicht für Wecksignalisierungsgelegenheiten gilt; und
Überspringen des Überwachens des physischen Downlinksteuerkanals bei der Zielgelegenheit.

12. Verfahren, das Folgendes umfasst:
Übertragen (410) von ersten Informationen, die anzeigen, dass Gelegenheitskandidaten zum Überwachen eines physischen Downlinksteuerkanals zu überspringen sind, von einer zweiten Vorrichtung zu einer ersten Vorrichtung;
Bestimmen (420) einer Zieldauer zum Übertragen einer Wecksignalisierung auf Basis von zweiten Informationen, die anzeigen, dass das Überspringen des Überwachens auf einen physischen Downlinksteuerkanal mit einem Downlinksteuerinformationsformat zum Planen einer Downlinkzuweisung oder einer Uplinkgewährung anwendbar ist, wobei das Überspringen des Überwachens nicht für Wecksignalisierungsgelegenheiten gilt; und
Übertragen (430) der Wecksignalisierung bei der Zieldauer.

13. Computerlesbares Speichermedium, auf dem Programmanweisungen gespeichert sind, wobei die Anweisungen, wenn sie von einer Vorrichtung ausgeführt werden, die Vorrichtung veranlassen, mindestens Folgendes durchzuführen:
Empfangen (210) von ersten Informationen, die anzeigen, dass Gelegenheitskandidaten zum Überwachen eines physischen Downlinksteuerkanals zu überspringen sind;
Bestimmen (220) einer Zielgelegenheit aus den Gelegenheitskandidaten auf Basis von zweiten Informationen, die anzeigen, dass das Überspringen des Überwachens auf einen physischen Downlinksteuerkanal mit einem Downlinksteuerinformationsformat zum Planen einer Downlinkzuweisung oder einer Uplinkgewährung anwendbar ist, wobei das Überspringen des Überwachens nicht für Wecksignalisierungsgelegenheiten gilt; und
Überspringen des Überwachens des physischen Downlinksteuerkanals bei der Zielgelegenheit.

14. Computerlesbares Speichermedium, auf dem Programmanweisungen gespeichert sind, wobei die Anweisungen, wenn sie von einer Vorrichtung ausgeführt werden, die Vorrichtung veranlassen, mindestens Folgendes durchzuführen:
Übertragen (410) von ersten Informationen, die anzeigen, dass Gelegenheitskandidaten zum Überwachen eines physischen Downlinksteuerkanals zu überspringen sind;
Bestimmen (420) einer Zieldauer zum Übertragen einer Wecksignalisierung auf Basis von zweiten Informationen, die anzeigen, dass das Überspringen des Überwachens auf einen physischen Downlinksteuerkanal mit einem Downlinksteuerinformationsformat zum Planen einer Downlinkzuweisung oder einer Uplinkgewährung anwendbar ist, wobei das Überspringen des Überwachens nicht für Wecksignalisierungsgelegenheiten gilt; und
Übertragen (430) der Wecksignalisierung bei der Zieldauer.

## Revendications

1. Premier dispositif comprenant :
des moyens pour recevoir (210), au niveau du premier dispositif et en provenance d'un deuxième dispositif, des premières informations indiquant qu'il faut sauter des occasions candidates pour la surveillance d'un canal physique de contrôle de liaison descendante ;
des moyens pour déterminer (220) une occasion cible parmi les occasions candidates sur la base de deuxièmes informations indiquant que le fait de sauter la surveillance est applicable à un canal physique de contrôle de liaison descendante avec un format d'informations de contrôle de liaison descendante pour planifier une attribution de liaison descendante ou un octroi de liaison montante, dans lequel le fait de sauter la surveillance ne s'applique pas aux occasions de signalisation de réveil ; et
dans lequel le premier dispositif est configuré pour sauter la surveillance du canal physique de contrôle de liaison descendante à l'occasion cible.

2. Premier dispositif de la revendication **1,** dans lequel le premier dispositif est configuré pour déterminer l'occasion cible :
en réponse au fait que les deuxièmes informations indiquent qu'un canal physique de contrôle de liaison descendante adressé à un identifiant temporaire de réseau radio cellulaire est applicable à l'omission de surveillance, en déterminant en tant qu'occasion cible l'une des occasions candidates adressées à l'identifiant temporaire de réseau radio cellulaire.

3. Premier dispositif de la revendication 1, dans lequel le premier dispositif est configuré pour déterminer l'occasion cible :
en réponse au fait que les deuxièmes informations indiquent qu'un canal physique de contrôle de liaison descendante avec un format d'informations de contrôle de liaison descendante pour planifier une attribution de liaison descendante ou un octroi de liaison montante est applicable à l'omission de surveillance, en déterminant en tant qu'occasion cible l'une des occasions candidates avec le format d'informations de contrôle de liaison descendante pour planifier une attribution de liaison descendante ou un octroi de liaison montante.

4. Premier dispositif de l'une des revendications 1 à 3, dans lequel le premier dispositif est en outre configuré pour :
recevoir les deuxièmes informations via au moins l'un parmi une signalisation de contrôle de ressources radio et un élément de contrôle MAC.

5. Premier dispositif de la revendication 1, dans lequel les deuxièmes informations sont prédéfinies.

6. Premier dispositif de la revendication 1, dans lequel le premier dispositif est un dispositif terminal et le deuxième dispositif est un dispositif de réseau.

7. Deuxième dispositif comprenant :
des moyens pour transmettre (410) à un premier dispositif des premières informations indiquant qu'il faut sauter des occasions candidates pour la surveillance d'un canal physique de contrôle de liaison descendante ;
des moyens pour déterminer (420) une durée cible pour transmettre une signalisation de réveil sur la base de deuxièmes informations indiquant que le fait de sauter la surveillance est applicable à un canal physique de contrôle de liaison descendante avec un format d'informations de contrôle de liaison descendante pour planifier une attribution de liaison descendante ou un octroi de liaison montante, dans lequel le fait de sauter la surveillance ne s'applique pas aux occasions de signalisation de réveil ; et
des moyens pour transmettre (430) la signalisation de réveil dans la durée cible.

8. Deuxième dispositif de la revendication 7, dans lequel le deuxième dispositif est configuré pour déterminer la durée cible :
en réponse au fait que les deuxièmes informations indiquent qu'un canal physique de contrôle de liaison descendante adressé à un identifiant temporaire de réseau radio cellulaire est applicable à l'omission de surveillance, en déterminant une durée qui ne chevauche pas les occasions candidates adressées à l'identifiant temporaire de réseau radio cellulaire comme étant la durée cible.

9. Deuxième dispositif de la revendication 7, dans lequel le deuxième dispositif est configuré pour déterminer la durée cible :
en réponse au fait que les deuxièmes informations indiquent qu'un canal physique de contrôle de liaison descendante avec un format d'informations de contrôle de liaison descendante pour planifier une attribution de liaison descendante ou un octroi de liaison montante est applicable à l'omission de surveillance, en déterminant une durée qui ne chevauche pas les occasions candidates avec le format d'informations de contrôle de liaison descendante comme étant la durée cible.

10. Deuxième dispositif de la revendication 7, dans lequel le premier dispositif est un dispositif terminal et le deuxième dispositif est un dispositif de réseau.

11. Procédé comprenant les étapes suivantes :
recevoir (210), au niveau d'un premier dispositif et en provenance d'un deuxième dispositif, des premières informations indiquant qu'il faut sauter des occasions candidates pour la surveillance d'un canal physique de contrôle de liaison descendante ; déterminer (220) une occasion cible parmi les occasions candidates sur la base de deuxièmes informations indiquant que le fait de sauter la surveillance est applicable à un canal physique de contrôle de liaison descendante avec un format d'informations de contrôle de liaison descendante pour planifier une attribution de liaison descendante ou un octroi de liaison montante, dans lequel le fait de sauter la surveillance ne s'applique pas aux occasions de signalisation de réveil ; et
sauter la surveillance du canal physique de contrôle de liaison descendante à l'occasion cible.

12. Procédé comprenant les étapes suivantes :
transmettre (410), à un premier dispositif et en provenance d'un deuxième dispositif, des premières informations indiquant qu'il faut sauter des occasions candidates pour la surveillance d'un canal physique de contrôle de liaison descendante ;
déterminer (420) une durée cible pour transmettre une signalisation de réveil sur la base de deuxièmes informations indiquant que le fait de sauter la surveillance est applicable à un canal physique de contrôle de liaison descendante avec un format d'informations de contrôle de liaison descendante pour planifier une attribution de liaison descendante ou un octroi de liaison montante, dans lequel le fait de sauter la surveillance ne s'applique pas aux occasions de signalisation de réveil ; et
transmettre (430) la signalisation de réveil dans la durée cible.

13. Support de stockage lisible par ordinateur comprenant des instructions de programme stockées sur celui-ci, les instructions, lorsqu'elles sont exécutées par un appareil, amenant l'appareil à effectuer au moins les opérations suivantes :
recevoir (210) des premières informations indiquant qu'il faut sauter des occasions candidates pour la surveillance d'un canal physique de contrôle de liaison descendante ;
déterminer (220) une occasion cible parmi les occasions candidates sur la base de deuxièmes informations indiquant que le fait de sauter la surveillance est applicable à un canal physique de contrôle de liaison descendante avec un format d'informations de contrôle de liaison descendante pour planifier une attribution de liaison descendante ou un octroi de liaison montante, dans lequel le fait de sauter la surveillance ne s'applique pas aux occasions de signalisation de réveil ; et
sauter la surveillance du canal physique de contrôle de liaison descendante à l'occasion cible.

14. Support de stockage lisible par ordinateur comprenant des instructions de programme stockées sur celui-ci, les instructions, lorsqu'elles sont exécutées par un appareil, amenant l'appareil à effectuer au moins les opérations suivantes :
transmettre (410) des premières informations indiquant qu'il faut sauter des occasions candidates pour la surveillance d'un canal physique de contrôle de liaison descendante ;
déterminer (420) une durée cible pour transmettre une signalisation de réveil sur la base de deuxièmes informations indiquant que le fait de sauter la surveillance est applicable à un canal physique de contrôle de liaison descendante avec un format d'informations de contrôle de liaison descendante pour planifier une attribution de liaison descendante ou un octroi de liaison montante, dans lequel le fait de sauter la surveillance ne s'applique pas aux occasions de signalisation de réveil ; et
transmettre (430) la signalisation de réveil dans la durée cible.
